# EUROPEAN PATENT SPECIFICATION

(11) **EP 2 567 468 B1**
(45) Date of publication and mention of the grant of the patent: **22.01.2020**
(21) Application number: 11777539.5
(22) Date of filing: 02.05.2011
(51) Int. Cl.: H04B 7/04, H04L 1/18, H04J 11/00, H04W 72/04, H04L 1/16, H04W 72/12, H04W 88/08

(54) **METHOD OF CONTROL INDICATION IN MULTI-INPUT MULTI-OUTPUT COMMUNICATION SYSTEMS**
VERFAHREN ZUR ANZEIGESTEUERUNG IN MIMO-KOMMUNIKATIONSSYSTEMEN
PROCÉDÉ D'INDICATION DE COMMANDE DANS DES SYSTÈMES DE COMMUNICATION À ENTRÉES MULTIPLES ET À SORTIES MULTIPLES

(30) Priority: 04.05.2010 US 331193 P
(43) Date of publication of application: 13.03.2013
(73) Proprietor: Samsung Electronics Co., Ltd., Gyeonggi-do 443-742 (KR)
(72) Inventor: CHENG, Shan, Suwon-si Gyeonggi-do 443-727 (KR); KIM, Youn Sun, Seongnam-si Gyeonggi-do 463-727 (KR); HAN, Jin Kyu, Seoul 156-772 (KR); KIM, Sung Tae, Suwon-si Gyeonggi-do 442-150 (KR); LEE, Ju Ho, Suwon-si Gyeonggi-do 443-736 (KR)
(74) Representative: Nederlandsch Octrooibureau
(86) International application number: PCT/KR2011/003256
(87) International publication number: WO 2011/139058

(56) References cited:
- EP-A1- 2 129 157
- EP-A2- 2 541 796
- WO-A1-2009/123522
- WO-A2-2011/136554
- US-A1- 2009 268 693
- US-A1- 2009 300 456
- US-A1- 2010 050 039
- SAMSUNG: "HARQ handling in UL MIMO", 3GPP DRAFT; R1-102209 ULHARQ, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Beijing, china; 20100412, 6 April 2010 (2010-04-06), XP050419481, [retrieved on 2010-04-06]
- QUALCOMM INCORPORATED: "UL grants for MIMO transmissions", 3GPP DRAFT; R1-101493 UL GRANTS FOR MIMO TRANSMISSIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 17 February 2010 (2010-02-17), XP050419001, [retrieved on 2010-02-17]

## Description

### Technical Field

The present invention relates generally to a wireless cellular communication system with at least one base station (eNB) and at least one User Equipment (UE), and more particularly, to a wireless communication system where the eNB schedules both the downlink and uplink transmission to and from an UE, and in which Hybrid-Automatic Repeat reQuest (HARQ) is enabled.

### Background Art

A UE needs to receive an uplink grant sent by an eNB before it starts transmitting data traffic. The uplink grant can be delivered by a Downlink Control Indication (DCI) message in the downlink, which includes the detailed transmission formats such as resource allocation, New Data Indication (NDI), Modulation and Coding Scheme (MCS), Transmit Power Control (TPC), for the scheduled uplink transmission to occur. When the schedule uplink transmission includes transmission of multiple Transport Blocks (TBs) or CodeWords (CWs), the NDI and MCS should be defined for each enabled TB. The DCI for uplink grants is transmitted through a Physical Downlink Control CHannel (PDCCH), where such information as more DCI formats for DL grants, and power control, are included. The UE differentiates between types of DCI formats by their different sizes, and indication fields inside the DCI if present.

To enable HARQ in the uplink, the eNB needs to transmit an ACKnowledgement (ACK) or a Non-ACK (NACK) message to indicate whether a previous transmission is successfully or unsuccessfully decoded, respectively. The ACK/NACK indication is transmitted through the Physical HARQ Indication CHannel (PHICH), which is specifically allocated with a number of predefined downlink resources. The UE will retransmit the unsuccessful TB when a NACK is received until a maximum number of retransmissions are reached.

The HARQ processes can be classified into non-adaptive and adaptive types. In the non-adaptive HARQ, resource allocation, MCS and transmission format are the same as the initial transmission. In the adaptive HARQ, one or more of the retransmission parameters can be different from the initial transmission.

The HARQ processes can be classified into synchronous and asynchronous types. In the synchronous HARQ, the retransmissions occur at a predefined fixed timing relative to the initial transmission. In the asynchronous HARQ, retransmission can be scheduled at any time after a NACK signal is received.

### PDCCH Structure in LTE Rel8

In Third Generation Partnership Project (3GPP) Long Term Evolution (LTE) Release 8, a PDCCH is presented in the first several Orthogonal Frequency Division Multiplexing (OFDM) symbols. The number of OFDM symbols used for PDCCH is indicated in another physical control format indication channel (PCFICH) in the first OFDM symbol. Each PDCCH consists of L Control Channel Elements (CCE), where L=1,2,4,8 representing different CCE aggregation levels, and each CCE consists of 36 sub-carriers distributing throughout the transmission bandwidth.

### DCI Formats Design

The DCI formats in LTE are designed to carry necessary control information for users while minimizing the payload size and complexity in implementation and testing. In general, the number of bits required for resource assignment depends on the system bandwidth.

Table 1 lists the DCI formats supported in LTE release 8 and the number of bits in a PDCCH for uplink and downlink bandwidths of 50 resource blocks, corresponding to a spectrum allocation of about 10MHz.

### Table 1

**[Table 1]**

| DCIFormat | Purpose | Number of bits including CRC (for system bandwidth of 50 RB and four antennas at eNB) |
|---|---|---|
| 0 | PUSCH grants | 42 |
| 1 | PDSCH assignments with a single codeword | 47 |
| 1A | PDSCH assignments with compact format | 42 |
| 1B | PDSCH assignments for Rank-1 transmission | 46 |
| 1C | PDSCH assignments using very compact format | 26 |
| 1D | PDSCH assignments for MU-MIMO | 46 |
| 2 | PDSCH assignments for closed loop MIMO operation | 62 |
| 2A | PDSCH assignments for open loop MIMO operation | 58 |
| 3 | Transmit Power Control (TPC) commands for multiple users for PUCCH and PUSCH with 2-bit power adjustments | 42 |
| 3A | Transmit Power Control (TPC) commands for multiple users for PUCCH and PUSCH with 1-bit power adjustments | 42 |

### DCI format 0

In Release 8, the DCI format 0 carries information for scheduling uplink transmissions on a Physical Uplink Shared CHannel (PUSCH). The different fields of format 0 are summarized in Table 2, as follows:

### Table 2

### [Table 2]

**Table 2. DCI format 0 for UL grant in 3GPP Release 8**

| *Field* | *Bits* |
|---|---|
| Flag to differentiate between Format 0 and Format 1A | 1 |
| Hopping Flag | 1 |
| Resource block assignment and hopping resource allocation | variable |
| Modulation and coding scheme and redundant version | 5 |
| New data indicator | 1 |
| Power control command for scheduled PUSCH | 2 |
| Cyclic shift for DM RS | 3 |
| Request for transmission of an aperiodic CQI report | 1 |

### PDCCH Transmission and Blind Decoding

Multiple PDCCHs are first attached with a user-specific Cyclic Redundancy Check (CRC), and then independently encoded and rate matched according to CCE aggregation level 1, 2, 4 or 8, depending on link qualities, and then multiplexed and mapped to the PDCCH resources. At the UE side, the UE needs to search for its PDCCHs in a search space by assuming a certain CCE aggregation level and using the user-specific CRC. This is known as blind decoding, as the user may need to make multiple decoding attempts before the PDCCH could be located and identified.

### Uplink MIMO Transmission

When multiple antennas are available at the UE's side, it is possible to configure its transmission mode as MIMO transmission supporting multiple parallel TBs. Each TB is transmitted on one or multiple layers generated by the MIMO system, and an independent HARQ process is defined on each of the multiple TBs. In 3GPP release 10, up to 4 layers and 2 TBs are supported in the uplink.

Document SAMSUNG: "HARQ handling in UL MIMO", 3GPP DRAFT; R1-102209 ULHARQ, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Beijing, china; 20100412, 6 April 2010 (2010-04-06) proposes different alternatives to handle HARQ signalling in LTE uplink MIMO operation.

### Disclosure of Invention

### Technical Problem

Conventionally, to support scheduling transmission of multiple TBs, the eNB shall indicate the transmission properties, such as resource allocation, RS resources, MCS, and NDI etc., to the user before actual transmission takes place. Among those properties, some indications, e.g., MCS and NDI are unique for each of the transmitted TB, and thus multiple copies of these fields will be necessary for multiple TBs respectively, which will incur additional overheads for every additional TB introduced into the system. Moreover, when an user is configured with multi-TB transmission mode, it is not necessary all the possible TBs will be transmitted at each sub-frame. The eNB may dynamically change the number of TB being transmitted by turning off one or several TBs, depending on the channel and traffic conditions. The fields dedicated for those turned-off TB will be wasted in such a scenario.

There is a need in the art for efficient methods to support multi-TB MIMO transmission from a UE to an eNB.

### Solution to Problem

It is an aspect of the present invention to provide methods to support multi-TB MIMO transmission from UE to eNB with DCI formats of compact sizes.

To achieve the aspect, several new DCI formats is disclosed. To reduce the size of a DCI format for a UL grant, the disclosed DCI formats include:
1. Indication to which TBs the following control information is dedicated;
2. Control information for the above indicated TBs; and
3. Status indication for the other TBs, which could be explicit field(s), or implicitly indicated with other fields or messages.

The scope of the invention is defined in the appended claims, and based on the first embodiment of the present disclosure. Any reference to "embodiment(s)" or "aspect(s) of the invention" in this description not falling under the scope of the claims should be interpreted as illustrative example(s) for understanding the invention.

### Advantageous Effects of Invention

The present invention provides an efficient methods to support multi-TB MIMO transmission from a UE to an eNB.

### Brief Description of Drawings

The objects, features and advantages of the present invention will be more apparent from the following detailed description in conjunction with the accompanying drawings, in which:
Fig. 1 Illustrates a wireless transceiver structure of a wireless communication system according to the present invention;
Fig. 2 Illustrates a UL Grant Receiving Process according to a first embodiment of the present invention;
Fig. 3 Illustrates a UL Grant Receiving Process according to second and third embodiments of the present invention;
Fig. 4 Illustrates a HARQ Process for Two TBs according to the present invention; and
Fig. 5 Illustrates a HARQ Process for Four TBs according to the present invention.

### Mode for the Invention

Hereinafter, embodiments of the present invention are described in detail with reference to the accompanying drawings. The same reference numbers are used throughout the drawings to refer to the same or similar parts. The views in the drawings are schematic only, and are not intended to be to scale or correctly proportioned. Detailed descriptions of well-known functions and structures incorporated herein may be omitted for the sake of clarity and conciseness.

Throughout this specification, the Third Generation Partnership Project (3GPP) Long Term Evolution (LTE) Release 8 is regarded as the legacy system and the embodiments of the present invention can be implemented in the in-development Release 10 system. The present invention can also be applied to other cellular systems where appropriate. It is noted that the present invention can be also generalized to a system with different numbers of supportable layers and TBs.

The present invention focuses on a scenario in which multiple TBs are being transmitted with separate and independent HARQ processes assigned to each TB transmission.

To support multi-TB MIMO operation on the UL, multiple DCI formats could be defined, in which a DCI format 0A supports 1 TB adaptive control, or a DCI format 0B supports multi-TB adaptive control.

The present invention focuses on the design of format 0A, while allowing simultaneous multi-TB transmission.

It is also possible herein for a system to operate with DCI format 0A alone, without format 0B.

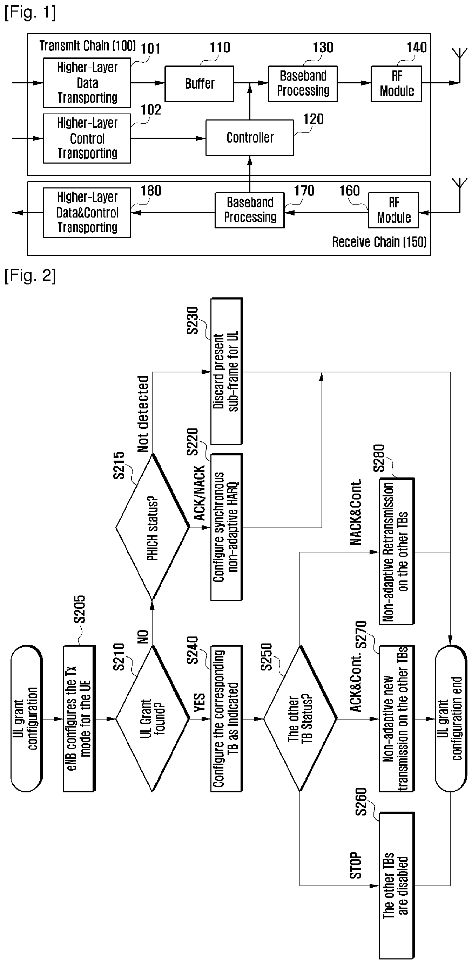

An physical layer transceiver structure is illustrated in Fig. 1, which can be applied to both eNB and UE sides. In the transmit chain (100), data from upper layers (101, 102) is buffered by a buffer (110), and a controller(120) schedules the buffered data for actual transmission. The scheduled data will be processed through the baseband processing block (130), including scrambling, encoding, modulation, and resource mapping. The output of the baseband module will be fed via the RF module (140) to the antenna for wireless emission.

In the receive chain (150), an RF module (160) will down convert the received RF signal to a baseband signal, and the baseband module (170), which includes demodulation and decoding, outputs received data for higher-layer processing (180). The baseband module (170) will also generate information such as channel condition feedback and HARQ feedback of the UE for controller, which utilizes the information for further transmission scheduling.

### Embodiment 1 for DCI 0A: 2-bit field indication for the other TB

Table 4 illustrates a DCI format 0A for a system supporting two TB transmissions. A new "Indication of TB" bit is introduced to indicate for which TB the following information such as NDI and MCS is dedicated. Prior to illustrating Table 4, for the indicated TB, the UE behavior is described in Table 3 as follows:

### Table 3

### [Table 3]

**Table 3**

| | |
|---|---|
| *NDI Toggled* | The reception of the previously-sent TB in a relative subframe is successful; the UE should continue transmission of the said TB using the same resource and format as in the previous settings. The UE should use the new RB assignment, MCS level and precoding indication in the present DCI for the new transmission. |
| *NDI Not Toggled* | The reception of the previously-sent TB in a relative subframe is unsuccessful; the UE should retransmit the TB using the new RB assignment, MCS level and precoding indication in the present DCI |

There may be a few fields that are common for all TBs, such as aperiodic SRS request, resource block assignment, power control command, cyclic shift of DMRS, and a Channel Quality Indicator (CQI) request and precoding indication.

There is one field of 2-bit length, which is capable of indicating four possible states. This field is designed to indicate the status of another TB. The possible statuses of each of the other TBs are listed below in Table 4:

### Table 4

### [Table 4]

**Table 4**

| | |
|---|---|
| *STOP*/*Disabled* | The respective TB is disabled and corresponding HARQ process is stopped; UE should terminate the reception of the respective TB and wait for another new transmission. |
| *ACK and continue* | The reception of the previously-sent TB in a relative subframe is successful; the UE should continue transmission of the said TB using the same resource and format as in the previous settings. The UE should toggle the local NDI status. |
| *NACK and continue* | The reception of the previously-sent TB in a relative subframe is unsuccessful; the UE should retransmit the said TB using the same resource and format as in the previous settings. |

**Table 4. DCI format 0A for UL grant for Two TBs**

| *Field* | *Bits* |
|---|---|
| Indication of TB | 1 |
| Aperiodic SRS request | 1 |
| Resource block assignment and hopping resource allocation | variable |
| Modulation and coding scheme and redundant version | 5 |
| New data indicator | 1 |
| Power control command for scheduled PUSCH | 2 |
| Cyclic shift for DM RS | 3 |
| Request for transmission of an aperiodic CQI report | 1 |
| Precoding information | 3 for 2Tx, and 6 for 4Rx |
| Status of the other TB | 2 |
| 00: STOP/Disabled | |
| 01: ACK and continue | |
| 10: NACK and continue | |
| 11: Reserved | |

FIG. 2 Illustrates a UL Grant Receiving Process according to a first embodiment of the present invention, where in FIG. 2 the UE PDCCH detection procedure is also illustrated.

In step S205, the eNB configures the UE in UL-MIMO compact mode, so that the UE will search DCI format 0A in the PDCCH. If the eNB does not configure the transmit mode, or the UE failed to obtain its transmission mode, the UE will have to blindly decode the PDCCH searching for a DCI format that includes UL grant.
1. If at step 210 a DCI grant cannot be decoded, the UE will continue to decode the ACK/NACK message in the PHICH in step S215. If an ACK/NACK message is decoded, the UE will schedule the UL transmission by assuming synchronous and non-adaptive HARQ transmission in step S220. If the UE fails to decode the PHICH message, it will discard the related subframe for a UL transmission in step S230.

If a DCI grant in the disclosed format is decoded, the UE configures the indicated TB with the configuration carried in the DCI in step S240, and configures the other TB according to the indication of the field "Status of the other TB", in step S250. Each of the other TBs can be configured as one of the three statuses "STOP" where the other TBs are disabled (S260), "ACK and continue" in which non-adaptive new transmission on the other TBs occurs, (S270) and "NACK and continue" in which non-adaptive re-transmission on the other TBs occurs (S280).

Embodiment 1 can also be applied to a system capable of N TB transmission. A DCI format according to the present invention is given in the following Table 5. Note for the "Status of the other (N-1) TBs" fields, 3 possible statuses need to be indicated. There are in total combinations.

### Table 5

### [Table 5]

**Table 5. A DCI format 0A for UL grant for N TBs**

| *Field* | *Bits* |
|---|---|
| Indication of TB | ┌log₂ *N*┐ |
| Aperiodic SRS request | 1 |
| Resource block assignment and hopping resource allocation | variable |
| Modulation and coding scheme and redundant version | 5 |
| New data indicator | 1 |
| Power control command for scheduled PUSCH | 2 |
| Cyclic shift for DM RS | 3 |
| Request for transmission of an aperiodic CQI report | 1 |
| Precoding information | 3 for 2Tx, and 6 for 4Rx |
| Status of the other (*N*-1) TBs | ┌log₂ 3^{*N*-1}┐ |

Table 6 illustrates a DCI format 0A for a system supporting two TB transmission, according to a second embodiment of the present invention. Different from embodiment 1, the two-bit indication for the other TB is interpreted as two fields: a one-bit NDI, and a one-bit stop or continue indication.

### Table 6

### [Table 6]

**Table 6. A DCI format 0A for UL grant for Two TBs**

| *Field* | *Bits* |
|---|---|
| Indication of TB | 1 |
| Aperiodic SRS request | 1 |
| Resource block assignment and hopping resource allocation | variable |
| Modulation and coding scheme and redundant version | 5 |
| New data indicator | 1 |
| Power control command for scheduled PUSCH | 2 |
| Cyclic shift for DM RS | 3 |
| Request for transmission of an aperiodic CQI report | 1 |
| Precoding information | 3 for 2Tx, and 6 for 4Rx |
| New data indicator of the other TB | 1 |
| Status of the other TB | 1 |
| 0: STOP/Disabled | |
| 1: Continue | |

The UE PDCCH detection procedure is identical to the procedure illustrated in Fig.2.

The second embodiment can also be applied to a system capable of N TB transmission.

The UE interprets the status of the other TB as the following shown in Table 7:

### Table 7

### [Table 7]

**Table 7**

| | |
|---|---|
| *STOP*/*Disabled* | "Status of the other TB" = 0 |
| *ACK and continue* | "Status of the other TB" = 1, and "NDI of the other TB" is toggled; |
| *NACK and continue* | "Status of the other TB" = 1, and "NDI of the other TB" is not toggled; |

Table 8 illustrates a DCI format 0A for a system supporting two TB transmission, according to a third embodiment of the present invention. Similar to the first and second embodiments, a new "Indication of TB" bit is introduced to indicate the TB for which the following information such as NDI and MCS is dedicated.

There is one field of 1-bit length, which is capable of indicating four possible states. This field is designed to indicate the status of another TB.

### Table 8

### [Table 8]

**Table 8. DCI format 0A for UL grant for Two TBs**

| *Field* | *Bits* |
|---|---|
| Indication of TB | 1 |
| Aperiodic SRS request | 1 |
| Resource block assignment and hopping resource allocation | variable |
| Modulation and coding scheme and redundant version | 5 |
| New data indicator | 1 |
| Power control command for scheduled PUSCH | 2 |
| Cyclic shift for DM RS | 3 |
| Request for transmission of an aperiodic CQI report | 1 |
| Precoding information | 3 for 2Tx, and 6 for 4Rx |
| Status of the other TB | 1 |
| 0: STOP/Disabled | |
| 1: continue | |

Different from embodiments 1 and 2, the UE needs to continue reading the PHICH channel for the ACK/NACK information about the corresponding TB. Once the ACK/ NACK is received, the UE interprets the status of each of the other TBs as the following shown in Table 9:

### Table 9

### [Table 9]

**Table 9**

| | |
|---|---|
| *STOP*/*Disabled* | "Status of the other TB" = 0 |
| *ACK and continue* | "Status of the other TB" = 1, and an ACK is received in PHICH for the corresponding TB |
| *NACK and continue* | "Status of the other TB" = 1, and a NACK is received in PHICH for the corresponding TB |

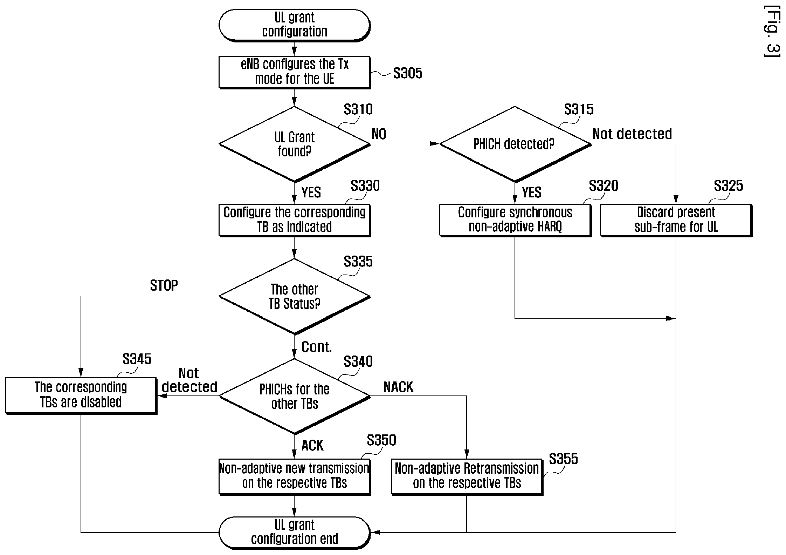

FIG. 3 Illustrates a UL Grant Receiving Process according to a first embodiment of the present invention, where in FIG. 3 the UE PDCCH detection procedure is also illustrated.

In step 305, the eNB can configure the UE in UL-MIMO compact mode, so that the UE will search DCI format 0A in the PDCCH. If the eNB does not configure the transmit mode, or the UE failed to obtain its transmission mode, the UE will have to blindly decode the PDCCH searching for a DCI format that includes UL grant.

If a DCI grant cannot be decoded in step S310, the UE will continue to decode the ACK/NACK message in PHICH in step S315. If an ACK/NACK message is decoded, the UE will schedule the UL transmission by assuming synchronous and non-adaptive HARQ transmission in step S320. If the UE fails to decode the PHICH message, it will discard the related subframe for UL transmission in step S325.

If a DCI grant in the disclosed format is decoded, the UE configures the indicated TB with the configuration carried in the DCI in step S330. and reads the ACK/NACK information for the other TBs from the HARQ indication channels in step S335.

Once the ACK/NACK message for the other TB is read, the UE configures the other TB according to the indication of the field "Status of the other TB" as well as ACK/ NACK information in step S340.. Each of the other TBs can be configured as one of the three statuses "STOP" where the other TBs are disabled (S345), "ACK and continue" in which non-adaptive new transmission on the respective TBs occurs, (S350) and "NACK and continue" in which non-adaptive retransmission on the respective TBs occurs (S355)

If the UE fails to decode the ACK/NACK information from the PHICH, the UE will discard transmission on the corresponding TB.

Embodiment 3 can also be applied to a system capable of N TB transmission by using an (N-1)-bit field to indication each of the other (N-1) TBs.

Table 10 illustrates a fourth embodiment including a DCI format 0A for a system supporting two TB transmission. Similar to embodiments 1, 2 and 3, an "Indication of TB" bit is introduced to indicate for which TB the following information such as NDI and MCS is to be dedicated.

Different from embodiment 1-3, the status of the other TBs is implicitly indicated by other information. Before showing Table 10, a preferred embodiment for a two-TB system is described as follows:

1. STOP/Disabled -> If the rank of the precoding information is one, or the rank of the precoding information is two and precoding is different from that of the initial transmission.
2. Continue -> If the rank of the precoding information is larger than two, or the rank of the precoding information is two and precoding is the same as that of the initial transmission.

The UE needs to continue reading the PHICH channel for the ACK/NACK information about the corresponding TB when the corresponding status is "continue". Once the ACK/NACK is received, the UE can determine whether the status of each of the other TBs is an "ACK and continue" or a "NACK and continue".

### Table 10

### [Table 10]

**Table 10. A DCI format 0A for UL grant for Two TBs**

| *Field* | *Bits* |
|---|---|
| Indication of TB | 1 |
| Aperiodic SRS request | 1 |
| Resource block assignment and hopping resource allocation | variable |
| Modulation and coding scheme and redundant version | 5 |
| New data indicator | 1 |
| Power control command for scheduled PUSCH | 2 |
| Cyclic shift for DM RS | 3 |
| Request for transmission of an aperiodic CQI report | 1 |
| Precoding information | 3 for 2Tx, and 6 for 4Rx |

The UE PDCCH detection procedure is identical to the procedure illustrated in FIG.3. Different from embodiment 3, the decision "The other TB status?" is made from predefined events.

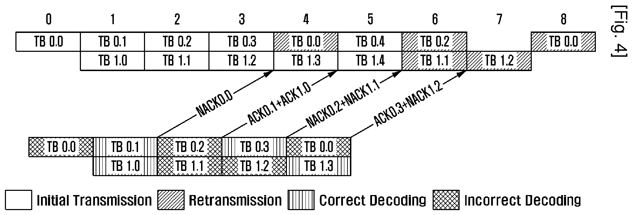

Fig. 4 Illustrates a HARQ Process for Two TBs according to the present invention. The HARQ process is assumed to be synchronous. The eNB sends an ACK/NACK message in frame n corresponding to the uplink transmission in frame n?i, and upon receiving an ACK/NACK, the UE will initialize the new- or re-transmission in frame n+k. The actual period value may vary from system to system. For example, i=k=4 for the 3GPP LTE uplink synchronous HARQ period. For the sake of conciseness, it is assumed in FIG. 4 that i=k=2.

The procedure in FIG. 4 is illustrated as shown in Table 11, as follows:

### Table 11

### [Table 11]

**Table 11**

| | |
|---|---|
| **Subframe 0** | UE: configured to transmit the 0-th packet of TB 0, denoted as TB0.0 |
| **Subframe 1** | UE: configured to transmit the 1st packet of TB 0, denoted as TB0.1, as well as the 0-th packet of TB 1, denoted as TB1.0. This is done by configuring TB1 as the indicated TB, while TB0 as "ACK and continue" |
| **Subframe 2** | UE: continue to transmit the 2nd packet of TB 0, denoted as TB0.2, as well as the 1st packet of TB 1, denoted as TB1.1. This is done by configuring either of TB0 or TB1 as the indicated TB, while the other TB1 or TB0 as "ACK and continue" |
| | eNB: TB0.0 cannot be correctly decoded by eNB, eNB send NACK in PHICH and configure the DCI so that TB0's status is "NACK and continue" |
| **Subframe 3** | UE: continue to transmit the 3rd packet of TB 0, denoted as TB0.3, as well as the 2nd packet of TB 1, denoted as TB1.2. This is done by configuring either of TB0 or TB1 as the indicated TB, while the other TB1 or TB0 as "ACK and continue" |
| | eNB: TB0.1 and TB1.0 are correctly decoded, eNB send two ACKs in PHICH and configure the DCI so that TBO's status is "ACK and continue" |
| **Subframe 4** | UE: retransmit TB0.0 on TB0, while continue transmission of the the 3rd packet of TB 1. |
| | eNB: TB0.2 and TB1.1 are both incorrectly decoded, eNB send two NACKs in PHICH and configure the DCI so that both TB0 and TB1's status is "NACK and continue" |
| **Subframe 5** | UE: continue transmission of TB0.4 and TB 1.4 |
| | eNB: TB0.3 is correctly decoded while TB1.2 is not; eNB send ACK for TB0 and NACK for TB1 in PHICH; configure the DCI so that TBO's transmission is reconfigured and TB1's status is "NACK and continue" |
| **Subframe 6** | UE: retransmission of TB0.2 and TB 1.1 |
| **Subframe 7** | UE: retransmission of TB1.2, TB0 is configured by eNB to be disabled |
| **Subframe 8** | UE: retransmission of TB0.0, TB1 is configured by eNB to be disabled |

As explained above, the disclosed DCI format can also support multiple TB transmission.

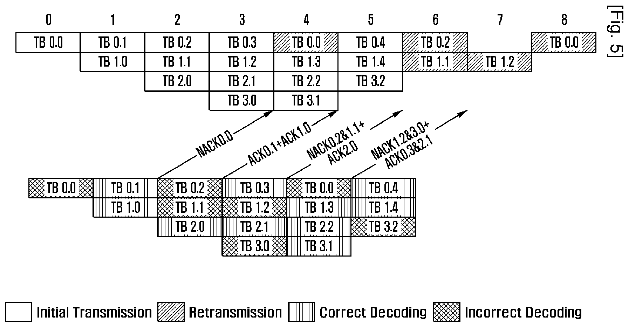

FIG. 5 Illustrates a HARQ Process for Four TBs according to the present invention. Similar to FIG.4, the disclosed method can initialize or tune the resources and transmit format for one TB at a time as shown in table 12.

### Table 12

**[Table 12]**

| | |
|---|---|
| **Subframe 0** | UE: configured to transmit the 0-th packet of TB 0, denoted as TB0.0 |
| **Subframe 1** | UE: configured to transmit the 1st packet of TB 0, denoted as TB0.1, as well as the 0-th packet of TB 1, denoted as TB1.0. This is done by configuring TB1 as the indicated TB, while TB0 as "ACK and continue" |
| **Subframe 2** | UE: continue to transmit the 2nd packet of TB 0, denoted as TB0.2, the 1st packet of TB 1, denoted as TB1.1, as well as packet TB2.0 for a new TB2. This is done by configuring TB2 as the indicated TB, while the other TB1 and TB0 as "ACK and continue" |
| | eNB: TB0.0 cannot be correctly decoded by eNB, eNB send NACK in PHICH and configure the DCI so that TBO's status is "NACK and continue" |
| **Subframe 3** | UE: continue to transmit the 3rd packet of TB 0, denoted as TB0.3, the 2nd packet of TB 1, denoted as TB1.2, the 1st packet of TB2, denoted as TB2.1, as well as TB3.0 for a new TB3. This is done by configuring TB3 as the indicated TB, while the other TBs as "ACK and continue" |
| | eNB: TB0.1 and TB1.0 are correctly decoded, eNB schedules two ACKs in PHICH and configure the DCI so that TBO's status is "ACK and continue" |
| **Subframe 4** | UE: retransmit TB0.0 on TB0, while continue transmission of the 3rd packet of TB 1, the 2nd packet of TB2, and the 1st packet of TB3. |
| | eNB: TB0.2 and TB1.1 are both incorrectly decoded, eNB schedules two NACKs and one ACK for TB2.0 in PHICH and configure the DCI so that both TB0 and TB1's status is "NACK and continue" |
| **Subframe 5** | UE: continue transmission of TB0.4, TB 1.4 and TB 3.2. TB2 is turned off by TB indication. The TB-dedicated DCI fields can be for either of the three transmitted TBs. |
| | eNB: TB0.3 and TB2.1 are correctly decoded while TB1.2 and TB3.0 are not; eNB schedules ACK for TB0 and TB2, and NACK for TB1 and TB3 in PHICH; configure the DCI so that TBO's transmission is reconfigured and TB1's status is "NACK and continue" |
| **Subframe 6** | UE: retransmission of TB0.2 and TB 1.1, the TB3 is disabled. |
| **Subframe 7** | UE: retransmission of TB1.2, TB0 is configured by eNB to be disabled |
| **Subframe 8** | UE: retransmission of TB0.0, TB1 is configured by eNB to be disabled |

While the invention has been shown and described with reference to certain embodiments thereof, it will be understood by those skilled in the art that various changes in form and detail may be made therein without departing from the scope of the invention as defined in the appended claims.

## Claims

1. A method for transmitting Downlink Control Information, DCI, to a terminal by a base station in a wireless communication system, wherein the terminal is configured to simultaneously transmit two transport blocks, TBs, to the base station in multiple-input multiple-output, MIMO, operation with separate, independent Hybrid Automatic Repeat reQest, HARQ, processes assigned to each TB, the method comprising the steps of:
generating DCI including a first field indicating a first TB to which the information for transmission of a TB in the DCI corresponds to and a second field indicating one of a plurality of states of a second TB; and
transmitting the DCI to the terminal, and
**characterised in that** the plurality of states comprises a first state indicating the second TB being disabled and stopping of a corresponding HARQ process of the second TB, a second state indicating acknowledgement, ACK, to the second TB and continuing of the corresponding HARQ process and a third state indicating negative acknowledgement, NACK, to the second TB and continuing of the corresponding HARQ process, and
wherein the method further comprises:
receiving new data corresponding to the second TB from the terminal as a result of the second field indicating the ACK and continuing of the corresponding HARQ process; receiving retransmitted data corresponding to the second TB from the terminal as a result of the second field indicating the NACK and continuing of the corresponding HARQ process, and
wherein the terminal is configured to disable a transmission of the second TB as a result of the second field indicating the second TB being disabled and stopping of a corresponding HARQ process.

2. A method for receiving Downlink Control Information, DCI, by a terminal in a wireless communication system, wherein the terminal is configured to simultaneously transmit two transport blocks, TB, to a base station in multiple-input multiple-output, MIMO, operation with separate, independent Hybrid Automatic Repeat reQest, HARQ, processes assigned to each TB, the method comprising the steps of:
receiving DCI transmitted from a base station, the DCI including a first field indicating a first TB to which the information for transmission of a TB in the DCI corresponds to and a second field indicating one of a plurality of states of a second TB; and
processing the DCI, and **characterised in that** the plurality of states comprises a first state indicating the second TB being disabled and stopping of a corresponding HARQ process of the second TB, a second state indicating acknowledgement, ACK, to the second TB and continuing of the corresponding HARQ process and a third state indicating negative acknowledgement, NACK, to the second TB and continuing of the corresponding HARQ process, and
wherein the method further comprises:
transmitting new data corresponding to the second TB from the terminal as a result of the second field indicating the ACK and continuing of the corresponding HARQ process;
retransmitting data corresponding to the second TB from the terminal as a result of the second field indicating the NACK and continuing of the corresponding HARQ process, and
wherein the terminal is configured to disable a transmission of the second TB as a result of the second field indicating the second TB being disabled and stopping of a corresponding HARQ process.

3. A base station for transmitting Downlink Control Information, DCI, to a terminal in a wireless communication system, wherein the terminal is configured to simultaneously transmit two transport blocks, TBs, to the base station in multiple-input multiple-output, MIMO, operation with separate, independent Hybrid Automatic Repeat reQest, HARQ, processes assigned to each TB, the base station comprising:
a control unit configured to control to generate DCI including a first field indicating a first TB to which the information for transmission of a TB in the DCI corresponds to and a second field indicating one of a plurality of states of a second TB; and
a communication unit to transmit the DCI to the terminal, and
**characterised in that** the plurality of states comprises a first state indicating the second TB being disabled and stopping of a corresponding HARQ process of the second TB, a second state indicating acknowledgement, ACK, to the second TB and continuing of the corresponding HARQ process and a third state indicating negative acknowledgement, NACK, to the second TB and continuing of the corresponding HARQ process, and
wherein the control unit is further configured to control to:
receive new data corresponding to the second TB from the terminal as a result of the second field indicating the ACK and continuing of the corresponding HARQ process,
receive retransmitted data corresponding to the second TB from the terminal as a result of the second field indicating the NACK and continuing of the corresponding HARQ process, and
wherein the terminal is configured to disable a transmission of the second TB as a result of the second field indicating the second TB being disabled and stopping of a corresponding HARQ process.

4. A terminal for receiving and processing Downlink Control Information, DCI, from a base station in a wireless communication system, wherein the terminal is configured to simultaneously transmit two transport blocks, TBs, to a base station in multiple-input multiple-output, MIMO, operation with separate, independent Hybrid Automatic Repeat reQest, HARQ, processes assigned to each TB, the terminal comprising:
a communication unit to receive DCI transmitted from a base station, the DCI including a first field indicating a first TB to which the information for transmission of a TB in the DCI corresponds to and a second field indicating one of a plurality of states of a second TB; and
a control unit configured to control to process the DCI, and
**characterised in that** the plurality of states comprises a first state indicating the second TB being disabled and stopping of a corresponding HARQ process of the second TB, a second state indicating acknowledgement, ACK, to the second TB and continuing of the corresponding HARQ process and a third state indicating negative acknowledgement, NACK, to the second TB and continuing of the corresponding HARQ process
wherein the control unit is further configured to control to:
transmit new data corresponding to the second TB from the terminal as a result of the second field indicating the ACK and continuing of the corresponding HARQ process,
retransmit data corresponding to the second TB from the terminal as a result of the second field indicating the NACK and continuing of the corresponding HARQ process, and
wherein the terminal is configured to disable a transmission of the second TB as a result of the second field indicating the second TB being disabled and stopping of a corresponding HARQ process.

## Patentansprüche

1. Verfahren zum Übertragen von Downlink-Kontrollinformationen, DCI, an ein Endgerät durch eine Basisstation in einem drahtlosen Kommunikationssystem, wobei das Endgerät für Folgendes konfiguriert ist:
gleichzeitiges Übertragen von zwei Transportblöcken, TBs, an die Basisstation im MIMO (Multiple Input, Multiple Output)-Betrieb mit getrennten, unabhängigen HARQ (Hybrid Automatic Repeat reQest)-Verfahren, die jedem TB zugeteilt werden, wobei das Verfahren folgende Schritte umfasst:
Erzeugen von DCI einschließlich eines ersten Feldes, das einen ersten TB anzeigt, dem die Informationen zur Übertragung eines TB in den DCI entsprechen und eines zweiten Feldes, das einen von mehreren Zuständen eines zweiten TB anzeigt; und
Übertragen der DCI an das Endgerät, und
**dadurch gekennzeichnet, dass**
die Vielzahl der Zustände einen ersten Zustand umfasst, der anzeigt, dass der zweite TB deaktiviert ist und ein entsprechendes HARQ-Verfahren des zweiten TB stoppt, einen zweiten Zustand, der dem zweiten TB eine Bestätigung, ACK, anzeigt und das entsprechende HARQ-Verfahren fortsetzt und einen dritten Zustand, der dem zweiten TB eine Nichtbestätigung, NACK, anzeigt, und das entsprechende HARQ-Verfahren fortsetzt, und
wobei das Verfahren des Weiteren Folgendes umfasst:
Empfangen neuer Daten, die dem zweiten TB entsprechen, von dem Endgerät als Ergebnis des zweiten Feldes, das die ACK anzeigt und Fortsetzen des entsprechenden HARQ-Verfahrens;
Empfangen wiederübertragener Daten, die dem zweiten TB entsprechen, von dem Endgerät als Ergebnis des zweiten Feldes, das die NACK anzeigt und Fortsetzen des entsprechenden HARQ-Verfahrens, und
wobei das Endgerät konfiguriert ist, um eine Übertragung des zweiten TB als Ergebnis des zweiten Feldes zu deaktivieren, das anzeigt, dass der zweite TB deaktiviert ist und Stoppen eines entsprechenden HARQ-Verfahrens.

2. Verfahren zum Empfangen von Downlink-Kontrollinformationen, DCI, durch ein Endgerät in einem drahtlosen Kommunikationssystem, wobei das Endgerät konfiguriert ist, zum gleichzeitigen Übertragen von zwei Transportblöcken, TBs, an die Basisstation im MIMO (Multiple Input, Multiple Output)-Betrieb mit getrennten, unabhängigen HARQ (Hybrid Automatic Repeat reQest)-Verfahren, die jedem TB zugeteilt werden, wobei das Verfahren folgende Schritte umfasst:
Empfangen von DCI, die von einer Basisstation übertragen wurden, wobei die DCI ein erstes Feld einschließen, das einen ersten TB anzeigt, dem die Informationen zur Übertragung eines TB in den DCI entsprechen und ein zweites Feld, das einen von mehreren Zuständen eines zweiten TB anzeigt; und
Verarbeiten der DCI, und
**dadurch gekennzeichnet, dass**
die Vielzahl der Zustände einen ersten Zustand umfasst, der anzeigt, dass der zweite TB deaktiviert ist und ein entsprechendes HARQ-Verfahren des zweiten TB stoppt, einen zweiten Zustand, der dem zweiten TB eine Bestätigung, ACK, anzeigt und das entsprechende HARQ-Verfahren fortsetzt und einen dritten Zustand, der dem zweiten TB eine Nichtbestätigung, NACK, anzeigt, und das entsprechende HARQ-Verfahren fortsetzt, und
wobei das Verfahren des Weiteren Folgendes umfasst:
Übertragen neuer Daten, die dem zweiten TB entsprechen, von dem Endgerät als Ergebnis des zweiten Feldes, das die ACK anzeigt und Fortsetzen des entsprechenden HARQ-Verfahrens;
Wiederübertragung von Daten, die dem zweiten TB entsprechen, von dem Endgerät als Ergebnis des zweiten Feldes, das die NACK anzeigt und Fortsetzen des entsprechenden HARQ-Verfahrens, und
wobei das Endgerät konfiguriert ist, um eine Übertragung des zweiten TB als Ergebnis des zweiten Feldes zu deaktivieren, das anzeigt, dass der zweite TB deaktiviert ist und Stoppen eines entsprechenden HARQ-Verfahrens.

3. Basisstation zum Übertragen von Downlink-Kontrollinformationen, DCI, durch ein Endgerät in einem drahtlosen Kommunikationssystem, wobei das Endgerät konfiguriert ist, zum gleichzeitigen Übertragen von zwei Transportblöcken, TBs, an die Basisstation im MIMO (Multiple Input, Multiple Output)-Betrieb mit getrennten, unabhängigen HARQ (Hybrid Automatic Repeat reQest)-Verfahren, die jedem TB zugeteilt werden, wobei die Basisstation Folgendes umfasst:
eine Steuereinheit, die konfiguriert ist, um zu steuern DCI zu erzeugen, einschließlich eines ersten Feldes, das einen ersten TB anzeigt, dem die Informationen zur Übertragung eines TB in den DCI entsprechen und eines zweiten Feldes, das einen von mehreren Zuständen eines zweiten TB anzeigt; und,
eine Kommunikationseinheit, um die DCI an das Endgerät zu übertragen, und
**dadurch gekennzeichnet, dass**
die Vielzahl der Zustände einen ersten Zustand umfasst, der anzeigt, dass der zweite TB deaktiviert ist und ein entsprechendes HARQ-Verfahren des zweiten TB stoppt, einen zweiten Zustand, der dem zweiten TB eine Bestätigung, ACK, anzeigt und das entsprechende HARQ-Verfahren fortsetzt und einen dritten Zustand, der dem zweiten TB eine Nichtbestätigung, NACK, anzeigt, und das entsprechende HARQ-Verfahren fortsetzt, und
wobei die Steuereinheit des Weiteren konfiguriert ist, um Folgendes zu steuern:
Empfangen neuer Daten, die dem zweiten TB entsprechen, von dem Endgerät als Ergebnis des zweiten Feldes, das die ACK anzeigt und Fortsetzen des entsprechenden HARQ-Verfahrens,
Empfangen wiederübertragener Daten, die dem zweiten TB entsprechen, von dem Endgerät als Ergebnis des zweiten Feldes, das die NACK anzeigt und Fortsetzen des entsprechenden HARQ-Verfahrens, und
wobei das Endgerät konfiguriert ist, um eine Übertragung des zweiten TB als Ergebnis des zweiten Feldes zu deaktivieren, das anzeigt, dass der zweite TB deaktiviert ist und Stoppen eines entsprechenden HARQ-Verfahrens.

4. Endgerät zum Empfangen und Verarbeiten von Downlink-Kontrollinformationen, DCI, von einer Basisstation in einem drahtlosen Kommunikationssystem, wobei das Endgerät konfiguriert ist, zum gleichzeitigen Übertragen von zwei Transportblöcken, TBs, an eine Basisstation im MIMO (Multiple Input, Multiple Output)-Betrieb mit getrennten, unabhängigen HARQ (Hybrid Automatic Repeat reQest)-Verfahren, die jedem TB zugeteilt werden, wobei das Endgerät Folgendes umfasst:
eine Kommunikationseinheit, zum Empfangen von DCI, die von einer Basisstation übertragen wurden, wobei die DCI ein erstes Feld einschließen, das einen ersten TB anzeigt, dem die Informationen zur Übertragung des TB in den DCI entsprechen und ein zweites Feld, das einen von mehreren Zuständen eines zweiten TB anzeigt; und
eine Steuereinheit, die konfiguriert ist, um die DCI-Verarbeitung zu steuern, und
**dadurch gekennzeichnet, dass**
die Vielzahl der Zustände einen ersten Zustand umfasst, der anzeigt, dass der zweite TB deaktiviert ist und ein entsprechendes HARQ-Verfahren des zweiten TB stoppt, einen zweiten Zustand, der dem zweiten TB eine Bestätigung, ACK,
anzeigt und das entsprechende HARQ-Verfahren fortsetzt und einen dritten Zustand, der dem zweiten TB eine Nichtbestätigung, NACK, anzeigt, und das entsprechende HARQ-Verfahren fortsetzt
wobei die Steuereinheit des Weiteren konfiguriert ist, um Folgendes zu steuern:
Übertragen neuer Daten, die dem zweiten TB entsprechen, von dem Endgerät als Ergebnis des zweiten Feldes, das die ACK anzeigt und Fortsetzen des entsprechenden HARQ-Verfahrens,
Wiederübertragen der Daten, die dem zweiten TB entsprechen, von dem Endgerät als Ergebnis des zweiten Feldes, das die NACK anzeigt und Fortsetzen des entsprechenden HARQ-Verfahrens, und
wobei das Endgerät konfiguriert ist, um eine Übertragung des zweiten TB als Ergebnis des zweiten Feldes zu deaktivieren, das anzeigt, dass der zweite TB deaktiviert ist und Stoppen eines entsprechenden HARQ-Verfahrens.

## Revendications

1. Procédé de transmission d'informations de commande de liaison descendante, DCI, à un terminal par une station de base dans un système de communication sans fil, où le terminal est configuré pour transmettre simultanément deux blocs de transport, TB, à la station de base dans une opération à entrées multiples et sorties multiples, MIMO, avec des processus distincts et indépendants de demande de répétition automatique hybride, HARQ, assignés à chaque TB, le procédé comprenant les étapes consistant à :
générer des DCI incluant un premier champ indiquant un premier TB auquel correspondent les informations pour la transmission d'un TB dans les DCI et un deuxième champ indiquant l'un d'une pluralité d'états d'un deuxième TB ; et
transmettre les DCI au terminal, et
**caractérisé en ce que** la pluralité d'états comprend un premier état indiquant que le deuxième TB est désactivé et l'arrêt d'un processus HARQ correspondant du deuxième TB, un deuxième état indiquant un accusé de réception positif, ACK, au deuxième TB et la continuation du processus HARQ correspondant et un troisième état indiquant un accusé de réception négatif, NACK, au deuxième TB et la continuation du processus HARQ correspondant, et
où le procédé comprend en outre :
la réception de nouvelles données correspondant au deuxième TB à partir du terminal à la suite de l'indication de l'ACK par le deuxième champ et la continuation du processus HARQ correspondant ;
la réception de données retransmises correspondant au deuxième TB à partir du terminal à la suite de l'indication du NACK par le deuxième champ et la continuation du processus HARQ correspondant, et
où le terminal est configuré pour désactiver une transmission du deuxième TB à la suite de l'indication par le deuxième champ que le deuxième TB est désactivé et l'arrêt d'un processus HARQ correspondant.

2. Procédé de réception d'informations de commande de liaison descendante, DCI, par un terminal dans un système de communication sans fil, où le terminal est configuré pour transmettre simultanément deux blocs de transport, TB, à une station de base dans une opération à entrées multiples et sorties multiples, MIMO, avec des processus distincts et indépendants de demande de répétition automatique hybride, HARQ, assignés à chaque TB, le procédé comprenant les étapes consistant à :
recevoir des DCI transmises à partir d'une station de base, les DCI incluant un premier champ indiquant un premier TB auquel correspondent les informations pour la transmission d'un TB dans les DCI et un deuxième champ indiquant l'un d'une pluralité d'états d'un deuxième TB ; et
traiter les DCI, et
**caractérisé en ce que**
la pluralité d'états comprend un premier état indiquant que le deuxième TB est désactivé et l'arrêt d'un processus HARQ correspondant du deuxième TB, un deuxième état indiquant un accusé de réception positif, ACK, au deuxième TB et la continuation du processus HARQ correspondant et un troisième état indiquant un accusé de réception négatif, NACK, au deuxième TB et la continuation du processus HARQ correspondant, et
où le procédé comprend en outre :
la transmission de nouvelles données correspondant au deuxième TB à partir du terminal à la suite de l'indication de l'ACK par le deuxième champ et la continuation du processus HARQ correspondant ;
la retransmission de données correspondant au deuxième TB à partir du terminal à la suite de l'indication du NACK par le deuxième champ et la continuation du processus HARQ correspondant, et
où le terminal est configuré pour désactiver une transmission du deuxième TB à la suite de l'indication par le deuxième champ que le deuxième TB est désactivé et l'arrêt d'un processus HARQ correspondant.

3. Station de base destinée à transmettre des informations de commande de liaison descendante, DCI, à un terminal dans un système de communication sans fil, où le terminal est configuré pour transmettre simultanément deux blocs de transport, TB, à la station de base dans une opération à entrées multiples et sorties multiples, MIMO, avec des processus distincts et indépendants de demande de répétition automatique hybride, HARQ, assignés à chaque TB, la station de base comprenant :
une unité de commande configurée pour commander la génération de DCI incluant un premier champ indiquant un premier TB auquel correspondent les informations pour la transmission d'un TB dans les DCI et un deuxième champ indiquant l'un d'une pluralité d'états d'un deuxième TB ; et une unité de communication pour transmettre les DCI au terminal, et
**caractérisée en ce que**
la pluralité d'états comprend un premier état indiquant que le deuxième TB est désactivé et l'arrêt d'un processus HARQ correspondant du deuxième TB, un deuxième état indiquant un accusé de réception positif, ACK, au deuxième TB et la continuation du processus HARQ correspondant et un troisième état indiquant un accusé de réception négatif, NACK, au deuxième TB et la continuation du processus HARQ correspondant, et
où l'unité de commande est configurée en outre pour commander :
la réception de nouvelles données correspondant au deuxième TB du terminal à la suite de l'indication de l'ACK par le deuxième champ et la continuation du processus HARQ correspondant,
la réception de données retransmises correspondant au deuxième TB du terminal à la suite de l'indication du NACK par le deuxième champ et la continuation du processus HARQ correspondant, et
où le terminal est configuré pour désactiver une transmission du deuxième TB à la suite de l'indication par le deuxième champ que le deuxième TB est désactivé et l'arrêt d'un processus HARQ correspondant.

4. Terminal destiné à recevoir et à traiter des informations de commande de liaison descendante, DCI, à partir d'une station de base dans un système de communication sans fil, où le terminal est configuré pour transmettre simultanément deux blocs de transport, TB, à une station de base dans une opération à entrées multiples et sorties multiples, MIMO, avec des processus distincts et indépendants de demande de répétition automatique hybride, HARQ, assignés à chaque TB, le terminal comprenant :
une unité de communication pour recevoir des DCI transmises à partir d'une station de base, les DCI incluant un premier champ indiquant un premier TB auquel correspondent les informations pour la transmission d'un TB dans les DCI et un deuxième champ indiquant l'un d'une pluralité d'états d'un deuxième TB ; et
une unité de commande configurée pour commander le traitement des DCI, et
**caractérisé en ce que**
la pluralité d'états comprend un premier état indiquant que le deuxième TB est désactivé et l'arrêt d'un processus HARQ correspondant du deuxième TB, un deuxième état indiquant un accusé de réception positif, ACK, au deuxième TB et la continuation du processus HARQ correspondant et un troisième état indiquant un accusé de réception négatif, NACK, au deuxième TB et la continuation du processus HARQ correspondant où l'unité de commande est configurée en outre pour commander :
la transmission de nouvelles données correspondant au deuxième TB à partir du terminal à la suite de l'indication de l'ACK par le deuxième champ et la continuation du processus HARQ correspondant,
la retransmission de données correspondant au deuxième TB du terminal à la suite de l'indication du NACK par le deuxième champ et la continuation du processus HARQ correspondant, et
où le terminal est configuré pour désactiver une transmission du deuxième TB à la suite de l'indication par le deuxième champ que le deuxième TB est désactivé et l'arrêt d'un processus HARQ correspondant.
